(19) Europäisches Patentamt
European Patent Office
Office européen des brevets

(11) **EP 2 037 699 A1**

(12) **EUROPEAN PATENT APPLICATION**
published in accordance with Art. 153(4) EPC

(43) Date of publication:
**18.03.2009 Bulletin 2009/12**

(51) Int Cl.:
*H04R 3/02* (2006.01)    *H04B 3/23* (2006.01)

(21) Application number: **07744111.1**

(22) Date of filing: **25.05.2007**

(86) International application number:
**PCT/JP2007/060677**

(87) International publication number:
**WO 2007/148509 (27.12.2007 Gazette 2007/52)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **23.06.2006 JP 2006173750**

(71) Applicant: **Panasonic Corporation**
**Kadoma-shi**
**Osaka 571-8501 (JP)**

(72) Inventors:
• URA, Takefumi
**2-chome, Chuo-ku, Osaka-shi, Osaka 540-6207 (JP)**
• KANAMORI, Takeo
**2-chome, Chuo-ku, Osaka-shi, Osaka 540-6207 (JP)**

(74) Representative: **Pautex Schneider, Nicole Véronique et al**
**Novagraaf International SA**
**25, avenue du Pailly**
**1220 Les Avanchets - Geneva (CH)**

(54) **ECHO SUPPRESSOR**

(57) It is an object of the present invention to provide an echo suppressor which is simple in construction in comparison with the conventional echo suppressor, and which can suppress echoes corresponding to the spatial transfer paths, and reduce the amount of calculations necessary to suppress echoes. The echo suppressor is operative under the condition that transfer functions corresponding to spatial transfer paths between two or more loudspeakers (**105, 106**) and one or more microphones (**107, 108**) are estimated on the basis of symmetrical arrangement of the loudspeakers (**105, 106**) and the microphones (**107**, **108**). The echo suppressor includes: a target signal generating unit (**111**) operable to generate target signals to be used to suppress echoes which are in signals indicating sounds received by the microphones (**107, 108**) from the loudspeakers (**105, 106**); a reference signal generating unit (**112**) operable to generate reference signals corresponding to the target signals on the basis of signals indicating sounds to be outputted from the loudspeakers (**105**, **106**); and an echo suppressing unit (**113**) operable to suppress, on the basis of the target signals and the reference signals, echoes which are in signals indicating sounds received by the microphones (**107, 108**).

FIG. 1

EP 2 037 699 A1

**Description**

Technical Field

The present invention relates to an echo suppressor operable to suppress echoes received by microphones from loudspeakers.

Background of the Invention

As an example, a conventional echo suppressor suppresses echoes by calculating cross spectrum between signals from microphones and the reference signals, and estimating spatial transfer characteristics between the loudspeakers and the microphones by using addition signals and subtraction signals calculated as reference signals from sound signals inputted into right and left channel loudspeakers (see, for example, Patent document 1).

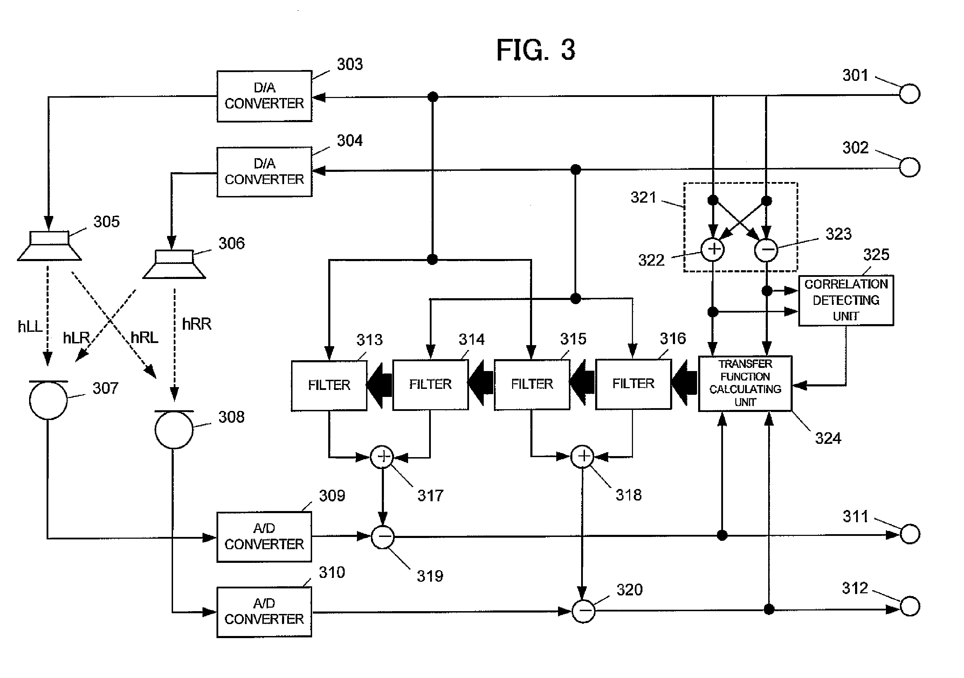

FIG. **3** is a block diagram showing a conventional echo suppressor disclosed in patent document 1. Two microphones and two loudspeakers are arranged as shown in FIG. **3**. The construction of the conventional echo suppressor shown in FIG. **3** will be described hereinafter.

The right and left channel stereo signals are respectively inputted into D/A converters **303** and **304** through input terminals **301** and **302**. The digital-to-analog conversions of the right and left channel stereo signals are performed by the D/A converters **303** and **304**, while the loudspeakers **305** and **306** output sounds represented by analog signals outputted from the D/A converters **303** and **304**.

The sounds outputted from the loudspeakers **305** and **306** are received as echoes by the microphones **307** and **308** through spatial transfer paths **hLL, hLR, hRL,** and **hRR**, while analog-to-digital conversions of signals indicative of the sounds are performed by the A/D converters **309** and **310**.

The addition/subtraction signal generating unit **321** generates an addition signal and a subtraction signal from the signals received through the input terminals **301** and **302** by using an adder **322** and a subtracter **323**, while the correlation detecting unit **325** detects a correlation from the addition signal and the subtraction signal.

The transfer function calculating unit **324** estimates spatial transfer characteristics between the loudspeakers and the microphones. More specifically, the transfer function calculating unit **324** performs a cross-spectral analysis of output signals from the subtracters **319** and **320**, and output signals from the addition/subtraction signal generating unit **321**.

The filters **313, 314, 315,** and **316** replicate spatial transfer characteristics hLL, **hLR, hRL**, and **hRR** corresponding to spatial transfer paths between loudspeakers **305, 306** and microphones **307**, **308** by using coefficients calculated by a transfer function calculating unit 324.

An adder **317** generates a replica echo signal by adding one of signals outputted from the filters **313** and **314** to the other of the signals outputted from the filters **313** and **314**. An adder **318** generates a replica echo signal by adding one of signals outputted from the filters **315** and **316** to the other of the signals outputted from the filters **315** and **316.**

A subtracter **319** suppresses an echo forming part of a signal to be outputted to an output terminal **311** by subtracting the replica echo signal outputted from the adder **317** from the digital signal outputted from the A/D converter **309**. A subtracter **320** suppresses an echo forming part of a signal to be outputted to an output terminal **312** by subtracting the replica echo signal outputted from the adder **318** from the digital signal outputted from the A/D converter **310**.
Patent document 1: Japanese Patent Laying-Open Publication No. 2003-102085 (page 56, FIG. 1)

Disclosure of the Invention

Problems to be solved by the invention

The conventional echo suppressor however encounters such a problem that the number of spatial transfer paths necessary to estimate and replicate spatial transfer characteristics increases with the number of loudspeakers and the number of microphones. Therefore, the conventional echo suppressor is required to perform complex calculations necessary to suppress echoes. The amount of calculations increases with the number of spatial transfer paths.

It is therefore an object of the present invention to provide an echo suppressor which is simple in construction in comparison with the conventional echo suppressor, and which can suppress echoes corresponding to the spatial transfer paths, and reduce the amount of calculations necessary to suppress echoes.

Means for solving the Problem

An echo suppressor according to the present invention is operative under the condition that transfer functions corresponding to spatial transfer paths between two or more loudspeakers and one or more microphones are estimated on the basis of symmetrical arrangement of the loudspeakers and the microphones. The echo suppressor comprises: a target signal generating unit operable to generate target signals to be used to suppress echoes which are in signals indicating sounds received by the microphones from the loudspeakers; a reference signal generating unit operable to generate reference signals corresponding to the target signals on the basis of signals indicating sounds to be outputted from the loudspeakers; and an echo suppressing unit operable to suppress, on the basis of the target signals and the reference signals, echoes which are in signals indicating sounds received by the microphones.

The echo suppressor thus constructed is simple in construction in comparison with the conventional echo suppressor, and can suppress echoes corresponding to the spatial transfer paths, and reduce the amount of calculations necessary to suppress echoes.

In the echo suppressor according to the present invention, loudspeakers are arranged symmetrically with respect to a center line, and the microphones are arranged symmetrically with respect to the center line.

The echo suppressor thus constructed is simple in construction, and can suppress echoes corresponding to the spatial transfer paths, and reduce the amount of calculations necessary to suppress echoes.

In the echo suppressor according to the present invention, when an odd number of loudspeakers are arranged symmetrically with respect to the center line, the center loudspeaker is disposed on the center line.

The echo suppressor thus constructed is simple in construction, and can suppress echoes corresponding to the spatial transfer paths, and reduce the amount of calculations necessary to suppress echoes.

In the echo suppressor according to the present invention, when an odd number of microphones are arranged symmetrically with respect to the center line, the center microphone is disposed on the center line.

The echo suppressor thus constructed is simple in construction, and can suppress echoes corresponding to the spatial transfer paths, and reduce the amount of calculations necessary to suppress echoes.

In the echo suppressor according to the present invention, the target signal generating unit may output, as the target signals, at least one of an addition signal based on the signals outputted from the microphones, a subtraction signal based on the signals outputted from the microphones, and a through signal.

The echo suppressor thus constructed is simple in construction, and can suppress echoes corresponding to the spatial transfer paths, and reduce the amount of calculations necessary to suppress echoes.

In the echo suppressor according to the present invention, the reference signal generating unit may output, as the reference signals, at least one of an addition signal based on signals to be outputted as sounds from the loudspeakers, a subtraction signal based on signals to be outputted as sounds from the loudspeakers, and a through signal.

The echo suppressor thus constructed is simple in construction, and can suppress echoes corresponding to the spatial transfer paths, and reduce the amount of calculations necessary to suppress echoes.

In the echo suppressor according to the present invention, the echo suppressing unit may use one or more adaptive filters.

The echo suppressor thus constructed is simple in construction, and can suppress echoes corresponding to the spatial transfer paths, and reduce the amount of calculations necessary to suppress echoes.

In the echo suppressor according to the present invention, the echo suppressing unit may perform an echo suppressing operation by using band-limited target signals and band-limited reference signals.

The echo suppressor thus constructed can reduce a processing load necessary to suppress echoes.

In the echo suppressor according to the present invention, the echo suppressing unit may update coefficients of the adaptive filters on the basis of judgments on whether or not the echoes are in the sound signals.

The echo suppressor thus constructed can enhance accuracy necessary to estimate spatial transfer characteristics.

The echo suppressor according to the present invention may further comprise: a signal combining unit operable to combine signals outputted from the echo suppressing unit, the signal combining unit generating signals by multiplying an addition signal based on signals outputted from the echo suppressing unit and a subtraction signal based on signals outputted from said echo suppressing unit by coefficients.

The echo suppressor thus constructed is simple in construction, and can suppress echoes corresponding to the spatial transfer paths, and reduce the amount of calculations necessary to suppress echoes.

Advantage of the Invention

The echo suppressor according to the present invention is simple in construction in comparison with the conventional echo suppressor, can suppress echoes corresponding to spatial transfer characteristics, and can reduce calculations necessary to suppress the echoes.

Brief Description of the Drawings

FIG. **1** is a block diagram showing an echo suppressor according to the first embodiment of the present invention.
FIG. **2** is a block diagram showing an echo suppressor according to the second embodiment of the present invention.
FIG. **3** is a block diagram showing a conventional echo suppressor.

Explanation of the Reference Numerals

| | |
|---|---|
| **101,102,301,302:** | input terminal |
| **103,104,303,304:** | D/A converter |
| **105,106,305,306:** | loudspeaker |
| **107,108,307,308:** | microphone |
| **109,110, 309, 310:** | A/D converter |
| **111:** | target signal generating unit |
| **112:** | reference signal generating unit |
| **113:** | echo suppressing unit |
| **114:** | signal combining unit |
| **115, 116, 311, 312:** | output terminal |
| **117,119,125,317,318,322:** | adder |
| **118,120,123,124,126,319,320,323:** | subtracter |
| **121, 122:** | adaptive filter |
| **127, 128:** | multiplier |
| **201:** | echo detecting unit |
| **313** to **316:** | filter |
| **321:** | addition/subtraction signal generating unit |
| **324:** | transfer function calculating unit |
| **325:** | correlation detecting unit |

The Preferred Embodiments of the Invention

The first and second embodiments of the echo suppressor according to the present invention will be described hereinafter with reference to accompanying drawings.

(First embodiment)

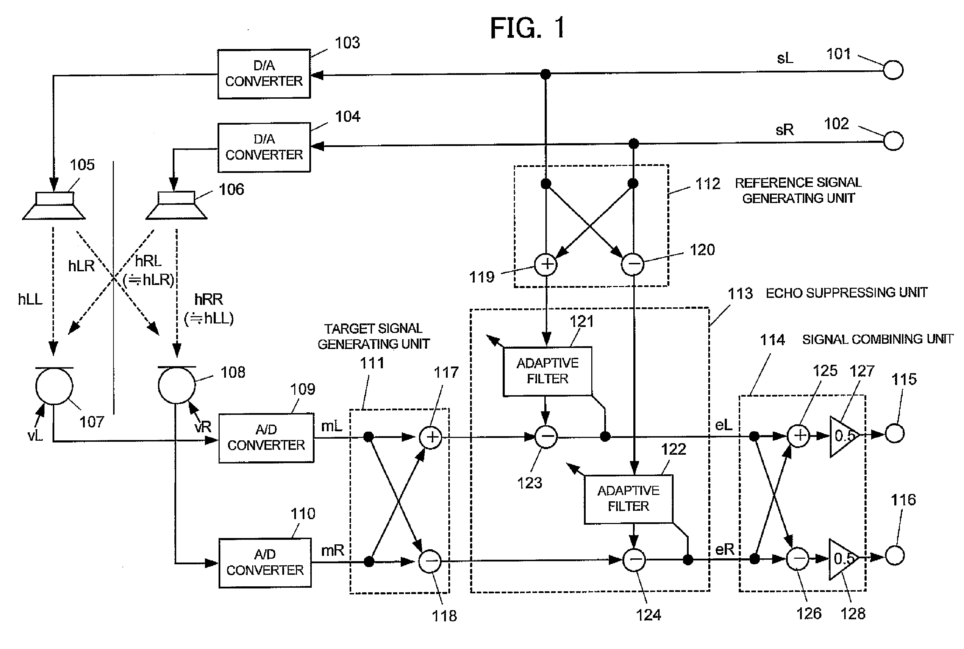

FIG. **1** is a block diagram showing an echo suppressor according to the first embodiment of the present invention. Two loudspeakers arranged symmetrically with respect to a center line, and two microphones arranged symmetrically with respect to the same center line are in FIG **1**. The construction of the echo suppressor shown in FIG. **1** will be described hereinafter.

As shown in FIG. **1**, right and left channel stereo signals are inputted into digital-to-analog converters (D/A converters) **103** and **104** through input terminals **101** and **102**, respectively. The digital-to-analog converters **103** and **104** perform digital-to-analog conversions of the right and left channel stereo signals, while the loudspeakers **105** and **106** output respective sounds generated from signals outputted from the D/A converters **103** and **104**.

The sounds outputted from the loudspeakers **105** and **106** are received as echoes by the microphones **107** and **108** through spatial transfer paths **hLL, hLR, hRL,** and **hRR**. Here, the spatial transfer paths **hLL, hLR, hRL,** and **hRR** are approximated by following approximate expressions.

$$hRL \fallingdotseq hLR \quad \cdots (1)$$

$$hRR \fallingdotseq hLL \quad \cdots (2)$$

The analog-to-digital converters (A/D converters) **109** and **110** performs analog-to-digital conversions of the sounds received by the microphones **107** and **108**. A target signal generating unit **111** has an adder **117** and a subtracter **118**, and generates target signals from digital signals outputted from the A/D converters 109 and **110**. Further, the target signal generating unit **111** may output signals received from the A/D converters **109** and **110** without change. Here, a signal inputted into the target signal generating unit **111**, and outputted without change from the target signal generating unit **111** is simply referred to as "through signal".

A reference signal generating unit **112** has an adder **119** and a subtracter **120**, and generates an addition signal and a subtraction signal from the signals inputted through the input terminals **101** and **102**, and outputs the addition signal and the subtraction signal to the echo suppressing unit **113** as reference signals. Here, the reference signal generating unit **112** may output through signals to an echo suppressing unit **113**.

The echo suppressing unit **113** has adaptive filters **121** and **122**, and subtracters **123** and **124**, and performs an echo suppression on the basis of the target signals generated by the target signal generating unit **111** and the reference signals generated by the reference signal generating unit **112**.

A signal combining unit **114** has an adder **125**, a subtracter **126**, and multipliers **127** and **128**, and combines signals outputted from the echo suppressing unit **113**. Here, the signal combining unit **114** may output through signals to the output terminals **115** and 116.

The operation of the echo suppressor according to the first embodiment of the present invention will be described hereinafter.

The stereo signals **sL** and **sR** are respectively inputted into the D/A converters **103** and **104** through the input terminals **101** and **102,** while the digital-to-analog conversions of the stereo signals **sL** and **sR** are performed by the D/A converters **103** and **104**. The signals outputted from the D/A converters **103** and **104** are respectively outputted as sounds by the loudspeakers **105** and **106**.

The sounds outputted from the loudspeakers **105** and **106** are received as echoes by the microphones **107** and **108** through spatial transfer paths **hLL, hLR, hRL,** and **hRR**. The analog-to-digital conversions of the sounds received by the microphones **107** and **108** are respectively performed by the A/D converters **109** and **110**.

Here, the above-mentioned approximate expressions (**1**) and (**2**) are respectively replaced by identity formulas. The signals mL and mR to be respectively outputted from the A/D converters **109** and **110** are represented by following identity formulas (**3**) and (**4**). Here, the legends **"vL"** and **"vR"** are intended to indicate sounds to be intrinsically received by the microphones **107** and **108**. The symbol "*" is intended to indicate an operator corresponding to convolution.

$$mL = hLL * sL + hLR * sR + vL \quad \cdots (3)$$

$$mR = hLR * sL + hLL * sR + vR \quad \cdots (4)$$

The target signal generating unit **111** generates, by using the adder **117** and the subtracter **118**, an addition signal **"mL+mR"** and a subtraction signal **"mL-mR"** as target signals to be outputted to the echo suppressing unit **113**. The addition signal "mL+mR" and the subtraction signal **"mL-mR"** are represented by following identity formulas (**5**) and (**6**).

$$mL+mR = (sL+sR) * (hLL+hLR) + (vL+vR) \quad \cdots (5)$$

$$mL-mR = (sL-sR) * (hLL-hLR) + (vL-vR) \quad \cdots (6)$$

The reference signal generating unit **112** generates, by using the adder **119** and the subtracter **120**, an addition signal **"sL+sR"** and a subtraction signal **"sL-sR"** as reference signals to be outputted to the echo suppressing unit 113.

The echo suppressing unit **113** calculates a replica echo signal by performing a convolution of the reference signal **"sL+sR"** and filter coefficients in the adaptive filter **121**, and suppresses an echo by subtracting the calculated replica echo signal from the target signal shown by the identity formula (**5**) in the subtracter **123**. Further, the echo suppressing unit **113** calculates a replica echo signal by performing a convolution of the reference signal **"sL-sR"** and filter coefficients in the adaptive filter **122**, and suppresses an echo by subtracting the calculated replica echo signal from the target signal shown by the identity formula (6) in the subtracter **124**.

The output signals to be outputted as error signals to the adaptive filters **121** and 122 from the subtracters **123** and **124** are represented by following identity formulas (**7**) and (8).

$$eL = vL + vR \quad \cdots \quad (7)$$

$$eR = vL - vR \quad \cdots \quad (8)$$

The filter coefficients to be used in the adaptive filters **121** and **122** are successively updated so as to minimize square mean values of the output signals shown by the identity formulas (**7**) and (**8**). The above operations to be performed by the adaptive filters **121** and 122 are equivalent to estimations of composed spatial transfer characteristics **"hLL+hLR"** and **"hLL-hLR".** In this embodiment, the normalized least mean square (NLMS) algorithm or another conventional algorithm is applied as an algorithm for updating filter coefficients in the adaptive filters **121** and **122**.

The signal combining unit **114** calculates an addition signal and a subtraction signal from the output signals **eL** and **eR** outputted from the echo suppressing unit **113** by using the adder **125** and the subtracter **126**, calculates signals really required as sounds **vL** and **vR** by multiplying each of the addition and subtraction signals by 0.5 in two multipliers **127** and 128, and outputs the signals through the output terminals **115** and **116**.

As will be seen from the foregoing explanation, the echo suppressor according to the first embodiment of the present invention can reduce the number of the spatial transfer paths to be estimated on the basis of symmetric arrangement of the loudspeakers and the microphone/microphones, and the number of echoes corresponding to the spatial transfer paths. Therefore, the echo suppressor according to the first embodiment of the present invention is simple in construction in comparison with the conventional echo suppressor, suppress echoes corresponding to the spatial transfer paths, and reduce the amount of calculations necessary to suppress the echoes.

Additionally, two loudspeakers and two microphones are arranged symmetrically in the echo suppressor according to the first embodiment of the present invention. However, the present invention is not limited by the number of the microphones and the number of the loudspeakers. Two or more loudspeakers and one or more microphones may be arranged symmetrically. In order to have the echo suppressor suppress echoes corresponding to the spatial transfer paths on the basis of symmetric arrangement of the loudspeakers and the microphone/microphones, the target signal generating unit **111**, the reference signal generating unit **112**, the echo suppressing unit **113**, and the signal combining unit **114** are properly constructed.

When an odd number of loudspeakers are arranged symmetrically with respect to a center line, it is essential to dispose the middle loudspeaker on the center line. When, on the other hand, an odd number of microphones are arranged symmetrically with respect to a center line, it is essential to dispose the middle microphone on the center line. When the echoes to be suppressed by the echo suppressor are within a specific frequency range (for example, the power of echoes is mainly distributed in an audio frequency range), the echo suppressing unit **113** may suppress echoes by processing band limited audio signals

(Second embodiment)

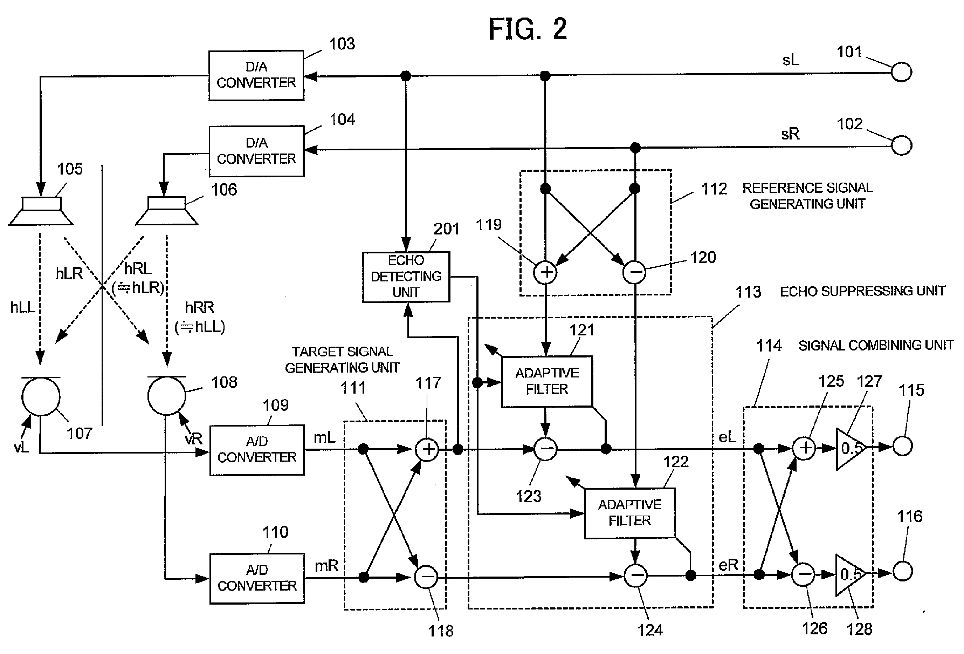

FIG. **2** is a block diagram showing an echo suppressor according to the second embodiment of the present invention. The components of the echo suppressor according to the second embodiment the same in construction as those of the echo suppressor according to the first embodiment will not be described, but bear the same reference numbers as those of the echo suppressor according to the first embodiment.

The echo suppressor shown in FIG. **2** further comprises an echo detecting unit **201** in comparison with the echo suppressor shown in FIG. **1**.

The echo detecting unit **201** calculates a mutual correlation between an input signal from an input terminal **101** and an output signal from the adder **117** forming part of the target signal generating unit **111**, determines whether or not the input signal has an echo on the basis of the calculated mutual correlation, and controls whether or not to update filter coefficients of the adaptive filters **121** and **122** on the basis of the determination. When, for example, the echo detecting unit **201** detects an echo from the input signal, the echo suppressing unit **113** updates the filter coefficients of the adaptive filters **121** and **122**.

From the foregoing description, it will be understood that the echo suppressor according to the second embodiment of the present intention can estimate spatial transfer characteristics with accuracy by updating filter coefficients on the basis of the determination on whether the input signal has an echo.

In the echo suppressor according to the second embodiment, the echo detecting unit 201 calculates a mutual correlation between an input signal from an input terminal 101 and an output signal from the adder **117** forming part of the target signal generating unit 111. However, the echo detecting unit **201** may calculate a ratio between an input signal from an input terminal 101 and an output signal from the adder **117** instead of the mutual correlation. The echo detecting unit **201** may use an input signal from an input terminal **102** and an output signal from the adder **117** forming part of the target signal generating unit **111**. The echo suppressor may comprise echo detecting units corresponding to respective adaptive filters. Each of the adaptive filters may use appropriate signals to update filter coefficients with accuracy.

Industrial Applicability

As will be seen form the foregoing description, the echo suppressor according to the present invention is simple in construction in comparison with the conventional echo suppressor, and can suppress echoes corresponding to spatial transfer paths, and is available as an echo suppressor for suppressing echoes received by one or more microphones from loudspeakers in an audio apparatus having two or more loudspeakers and one or more microphones.

**Claims**

1. An echo suppressor, comprising:

   a target signal generating unit operable to generate target signals from signals received by one or more microphones receiving sounds from two or more loudspeakers under the condition that transfer functions corresponding to spatial transfer paths between said loudspeakers and said microphones are estimated on the basis of symmetrical arrangement of said loudspeakers and said microphones, said target signal being used to suppress echoes in signals obtained by said microphones on the basis of said symmetrical arrangement of said loudspeakers and said microphones;
   a reference signal generating unit operable to generate reference signals corresponding to said target signals on the basis of signals indicating sounds to be outputted from said loudspeakers; and
   an echo suppressing unit operable to suppress, on the basis of said target signals and said reference signals, echoes which are in signals indicating sounds received by said microphones.

2. An echo suppressor according to claim 1, wherein
   said loudspeakers are arranged symmetrically with respect to a center line, and
   said microphones are arranged symmetrically with respect to said center line.

3. An echo suppressor according to claim 2, wherein
   when an odd number of loudspeakers are arranged symmetrically with respect to said center line, the center loudspeaker is disposed on said center line.

4. An echo suppressor according to claim 2, wherein
   when an odd number of microphones are arranged symmetrically with respect to said center line, the center microphone is disposed on said center line.

5. An echo suppressor according to claim 1, wherein
   said target signal generating unit outputs, as said target signals, at least one of an addition signal based on said signals outputted from said microphones, a subtraction signal based on said signals outputted from said microphones, and a through signal.

6. An echo suppressor according to claim 1, wherein
   said reference signal generating unit outputs, as said reference signals, at least one of an addition signal based on signals to be outputted as sounds from said loudspeakers, a subtraction signal based on signals to be outputted as sounds from said loudspeakers, and a through signal.

7. An echo suppressor according to claim 1, wherein
   said echo suppressing unit uses one or more adaptive filters.

8. An echo suppressor according to claim 1, wherein
   said echo suppressing unit performs an echo suppressing operation by using band-limited target signals and band-limited reference signals.

9. An echo suppressor according to claim 7, wherein

said echo suppressing unit updates coefficients of said adaptive filters on the basis of judgments on whether or not said echoes are in said sound signals.

10. An echo suppressor according to claim 1, further comprising:

a signal combining unit operable to combine signals outputted from said echo suppressing unit, said signal combining unit generating signals by multiplying an addition signal based on signals outputted from said echo suppressing unit and a subtraction signal based on signals outputted from said echo suppressing unit by coefficients.

FIG. 1

# FIG. 2

FIG. 2

FIG. 3

**INTERNATIONAL SEARCH REPORT**

| International application No. |
| --- |
| PCT/JP2007/060677 |

A.  CLASSIFICATION OF SUBJECT MATTER
*H04R3/02*(2006.01)i, *H04B3/23*(2006.01)i

According to International Patent Classification (IPC) or to both national classification and IPC

B.  FIELDS SEARCHED

Minimum documentation searched (classification system followed by classification symbols)
H04R3/02, H04B3/23

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)
JSTPlus(JDream2)

C.  DOCUMENTS CONSIDERED TO BE RELEVANT

| Category* | Citation of document, with indication, where appropriate, of the relevant passages | Relevant to claim No. |
| --- | --- | --- |
| Y | Suehiro SHIMAUCHI et al., "Giji Nyushutsuryoku Kankei o Riyo shita Stereo Onkyo Echo Canceller-yo Algorithm no Kento", The Acoustical Society of Japan (ASJ) Heisei 7 Nendo Shuki Kenkyu Happyokai Koen Ronbunshu, pages 543 to 544 | 1-4 |
| Y | JP 2001-095084 A  (Nippon Telegraph And Telephone Corp.), 06 April, 2001 (06.04.01), Par. No. [0014]; Fig. 3 (Family: none) | 1-4 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 October, 2007 (04.10.07) | 16 October, 2007 (16.10.07) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

| INTERNATIONAL SEARCH REPORT | International application No. |
|---|---|
| | PCT/JP2007/060677 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
     because they relate to subject matter not required to be searched by this Authority, namely:

2. ☐ Claims Nos.:
     because they relate to parts of the international application that do not comply with the prescribed requirements to such an extent that no meaningful international search can be carried out, specifically:

3. ☐ Claims Nos.:
     because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
   For the reasons below, this international application contains two
inventions not satisfying the requirement of unity of invention.
Main Invention: Claims 1-4
Second Invention: Claims 5 , 6
Third Invention: Claims 7, 9
Fourth Invention: Claim 8
Fifth Invention: Claim 10


   (Continued to the extra sheet.)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1-4

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2007/060677

Continuation of Box No.III of continuation of first sheet(2)

Document 1: Suehiro SHIMAUCHI et al., "Giji Nyushutsuryoku
            Kankei o Riyo shita Stereo Onkyo Echo Canceller-
            yo Algorithm no Kento", The Acoustical Society
            of Japan (ASJ) Heisei 7 Nendo Shuki Kenkyu
            Happyokai Koen Ronbunshu, pages 543 to 544

Document 2: JP 2001-095084 A (Nippon Telegraph And
            Telephone Corp.), 6 April, 2001 (06/04.01),
            [0014], and figure 3

The international search has been conducted on the assumption that the invention in claims 1 to 3 is "the first mentioned invention (main invention)." As a result, the technical feature of the main invention obviously does not involve any inventive step because of above documents 1, 2.

"The reference signal generating section" stated in claim 1 is disclosed as the matter, as shown in figure 1 and mentioned in the left column, page 543 of document 1, in which a stereophonic acoustic echo canceller generates a pseudo echo from a received signal by means of an echo path simulation filter. "The echo suppressing section" stated in claim 1 is disclosed as the matter, as shown in figure 1 and mentioned in the left column on page 543 of document 1, in which the stereophonic acoustic echo canceller subtracts the pseudo echo from the echoes collected by the microphones. "The target signal generating section" stated in claim 1 has an equivalent function to the technique of collecting echoes by means of the microphones as shown in figure 1 and mentioned in the left column on page 543 of document 1, in that the sounds outputted from the loudspeakers are collected by the microphones and a target signal is generated from the obtained signals.

In document 1, "arranging loudspeakers and one or more microphones in symmetrical positions and enabling estimation of the transfer characteristic by using the symmetry of the arrangement of the loudspeakers and microphones in respect of space transfer path" as stated in claim 1 and "arranging the loudspeakers bilaterally symmetrically with respect to the center line and arranging the microphones bilaterally symmetrically with respect to the same center line" as stated in claim 2 are not disclosed. However, the matter that the transfer characteristic between the loudspeakers and microphones becomes bilaterally symmetric when at least an even number of loudspeakers and an even number of microphones are arranged bilaterally symmetrically with respect to the center line is a well-known technical matter as disclosed in the right column of document 1 and [0014] of document 2. In consequently, the technique that applying the above well-known technique to document 1, arranging the loudspeakers bilaterally symmetrically with respect to the center line, arranging the microphones bilaterally symmetrically with respect to the same center line, and enabling estimation of the transfer characteristic by using the symmetry of the arrangement with respect to the space transfer paths between the loudspeakers and microphones would be easily conceived by a person skilled in the art.

In document 1, "arranging the central loudspeaker on the center line if an odd number of loudspeakers are arranged" as stated in claim 3 is not disclosed. However, the matter that the symmetry is used also if an odd number of loudspeakers are arranged is the matter which a person skilled in the art must naturally consider. In this case, arranging the central loudspeaker on the center line to make the transfer characteristic symmetrical would be easily conceived by a person skilled in the art.

(Continued to the next extra sheet.)

Form PCT/ISA/210 (extra sheet) (April 2005)

**INTERNATIONAL SEARCH REPORT**

International application No.

PCT/JP2007/060677

Continuation of Box No.III of continuation of first sheet(2)

As long as claims 5, 6 (the second invention) is compared with the above prior art, "(temporary) special technical feature" of the second invention is that "each signal generating section outputs one or more of the addition signal, the subtraction signal, and the through signal."

As long as claims 7, 9 (the third invention) is compared with the above prior art, "(temporary) special technical feature" of the third invention is that "the echo suppressing section uses an adaptive filter."

As long as claim 8 (the fourth invention) is compared with the above prior art, "(temporary) special technical feature" of the fourth invention is that "the echo suppressing section carries out a processing related to suppression of the echo with limitation to specific frequency bands of the target signal and the reference signal."

As long as claim 10 (the fifth invention) is compared with the above prior art, "(temporary) special technical feature" of the fifth invention is that "a signal combining section for combining output signals outputted from the echo suppressing section is provided, and the signal combining section multiplies the addition signal and the subtraction signal produced from the output signals outputted from the echo suppressing section by a predetermined constant and combines the resultant signals".

Therefore, no technical relationship among these main and second to fifth inventions involving one or more of the same or corresponding special technical features can be seen."

Since the invention of claim 4 is merely an aggregation of the invention of claim 2 and a well-known technique, the invention of claim 4 is categorized into the same invention division as that of claim 2.

<Concerning the object of the search>

Claims 1-4 relate to an echo suppressing device comprising "a target signal generating section for generating a target signal to suppress the echoes by using the symmetry of the arrangement of the loudspeakers and microphones from the collected sound signals produced when the microphones collect the sounds outputted from the loudspeakers." Though the invention of claims 1-4 includes any echo suppressing device for generating a target signal by using the symmetry of the arrangement of the loudspeakers and microphones, what is disclosed within the meaning of PCT Article 5 is only any one of echo suppressing devices each for generating a target signal on the assumption that the space transfer paths between the loudspeakers and microphones arranged symmetrically with respect to the center line take on the same value. Therefore, claims 1-4 is not supported by the disclosure by the description within the meaning of PCT Article 6.

Even in view of the technical common knowledge on the filing date, the constitution of "the target signal generating section for generating a target signal to suppress the echoes by using the symmetry of the arrangement of the loudspeakers and microphones" cannot be identified. In consequence, claims 1-4 are lacking the requirement of clarity prescribed in PCT Article 6.

Therefore, the international search has been conducted on the scope supported by the disclosure by the description, namely, an echo suppressing device having a target signal generating section for generating a target signal on the assumption that the space transfer paths between the loudspeakers and microphones arranged symmetrically with respect to the center line take on the same value.

Therefore, the technical feature of the main invention cannot be considered as "a special technical feature" within the meaning of PCT Rule 13.2, second sentence.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003102085 A